(19) Europäisches Patentamt
European Patent Office
Office européen des brevets

(11) Publication number: **0 069 718**
**B1**

(12) # EUROPEAN PATENT SPECIFICATION

(45) Date of publication of patent specification: **27.04.88**

(51) Int. Cl.$^4$: **C 01 F 7/74**, C 02 F 1/52, D 21 H 3/68

(21) Application number: **82850148.6**

(22) Date of filing: **29.06.82**

(54) **Basic aluminium sulphate, its manufacture and use.**

(30) Priority: **03.07.81 SE 8104148**

(43) Date of publication of application:
**12.01.83 Bulletin 83/02**

(45) Publication of the grant of the patent:
**27.04.88 Bulletin 88/17**

(84) Designated Contracting States:
**AT BE CH DE FR GB IT LI LU NL SE**

(56) References cited:
**EP-A-0 005 419**
**EP-A-0 062 015**
**EP-A-0 069 719**
**DE-A-2 628 988**
**FR-A-2 355 632**
**US-A-4 238 347**

**CHEMICAL ABSTRACTS, vol. 90, no. 24, June 1979, page 138, no. 189239g, Columbus, Ohio, USA**

**CHEMICAL ABSTRACTS, vol. 89, no. 10, 4th September 1978, page 274, no. 79778d, Columbus, Ohio, USA**

**CHEMICAL ABSTRACTS, vol. 81, no. 10, 9th September 1974, pages 301,302, no. 54134n, Columbus, Ohio, USA**

(73) Proprietor: **Boliden Aktiebolag**
**Box 5508**
**S-114 85 Stockholm (SE)**

(72) Inventor: **Gunnarsson, Knut Lennart**
**Birkagatan 135**
**S-252 60 Helsingborg (SE)**
Inventor: **Nilsson, Rolf Olof**
**Ransviksvägen 14**
**S-260 42 Mölle (SE)**

(74) Representative: **Lundin, Björn-Eric**
**Boliden Aktiebolag Patents and Trade Marks**
**Box 81550**
**S-104 82 Stockholm (SE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 069 718 B1

**Description**

Technical field

The present invention relates to a basic aluminium sulphate composition which, in aqueous solution, produces positively charged polynucleate complexes having charge-neutralising properties in systems containing suspended or colloidal, negatively charged particles; the manufacture of such basic aluminium sulphate composition and the use thereof.

The object of the present invention is to provide a basic aluminium sulphate composition which has a high aluminium content and provides a high polynucleate number, and which can be dissolved in solid form in water to form an aqueous solution having charge-neutralising properties.

Background art

A number of aluminium products are known which contain polynucleate aluminium ions in solution. These products have been developed as a result of the demand for more effective chemicals for water-purifying, paper-sizing and plant-dewatering processes, for example. Because of the high charge of the metal ions, the properties exhibited by the polynucleate products are far superior when used within the aforementioned technical fields than the mononucleate compounds previously used. The aluminium products developed with the aim of improving efficiency in the aforementioned fields of use are principally of two different kinds, namely chloride-based basic Al-compounds and sulphate-based basic Al-compounds. Of the first mentioned group there was first developed a polyaluminium chloride (PAC) of the general formula

$$[AlCl_x(OH)_{3-x}]_n$$

where

$x$ is $\leq 3$, normally 1—2.

These compounds and their manufacture are described in, for example, SE—B—7201333-7, SE—B—7405237-4, SE—B—7412965-1, SE—B—7503641-8 and DE—A—2630768. A common feature of these aluminium-chloride containing compositions of the PAC-type based on polynucleate complexes is that the methods required to produce solutions which are effective, inter alia, in purifying water, are extremely complicated, and consequently the cost of the solutions is relatively high vis-a-vis the effect obtained.

The second type of aluminium-chloride solutions, PALC, which are also based on the same polynucleate complexes have general summary formulae which can be written as

$$[AlCl_3 \cdot xAOH]_n$$

where

A is an alkali metal, and

$$[AlCl_3 \cdot \frac{x}{2} B(OH)_2]_n$$

where B is an alkali earth metal, $n$ is a positive integer and $x$ is an integer in the range 1—2.7.

Polynucleate aluminium-chloride solutions of the PALC-type are described in FR—A—2308594 according to which the solutions are prepared by alkalising aluminium-chloride solutions with solutions of alkali metal hydroxide. According to this reference, however, it is not possible to produce clear, stable solutions other than when preparing highly diluted solutions. By "stable solution" is meant here and in the following a solution whose composition and properties will not change when the solution is stored for a long period of time. For example, it is stated in the aforementioned reference that, under special conditions, there can be obtained a solution with up to 0.40 moles Al per litre. This solution, which has a highly limited stability, must be injected directly into the water to be purified. It is clear from the reference, and in particular from the Examples therein, that solutions where the aluminium concentration is higher than about 0.1 mole/l cannot be expected to be effective and stable with the known PALC-solutions described in the reference.

The first mentioned type of aluminium product (PAC) is particularly expensive to produce, due to the complicated manufacturing procedures required. The other type of aluminium product (PALC) can be produced more cheaply, but is less effective.

Sulphate-based basic Al-compounds are described in EP—A—0005419, EP—A—0017634 and SE—A—8101830-1 (=EP—A—0062015, published 1982 September 23 and thus an intermediate reference in accordance with EPC Article 54(3) and (4)).

EP—A—0062015 (=SE 8101830-1) discloses an aluminium sulphate solution, or if dried, a dry product, comprising a composition with complexes of the formula

$$Al_m(OH)_n^{3m-n}$$

but also accompanying anions and cations deriving from the preparation of the complex, i.e. inter alia $Na^+$-ions, and $SO_4^{2-}$-ions, or $Na_2SO_4$ if a dry product is at hand, to the same extent as originally added, ($Al_2(SO_4)_3$; $Na_2CO_3$).

These products contain, to a greater or lesser extent, polynucleate metal ions in solutions, and are thus an effective water-purifying agent. The sulphate-based products can also be used for purposes other than purifying water, since the presence of the polynucleate metal ions enables desired effects to be achieved.

Such applications include, for example, the sizing of paper in paper-manufacturing processes, in which an aluminium sulphate and a resin adhesive are added to the stock, the adhesive being fixed to the fibres in a later manufacturing stage, with the aid of the aluminium sulphate. In this respect, it has been found that polynucleate sulphate-based Al-compounds are superior to mononucleate Al-sulphate. Polynucleate sulphate-based Al-compounds are also excellent retention agents, i.e. agents which increase the amount of solid material retained on a paper web, i.e. such material as filling agents and fibres. In certain cases, however, it is desirable, and also necessary, to limit the supply of sulphate ions as far as possible in applications within the aforementioned fields of use, and particularly when purifying drinking water. This is of particular importance in systems which are used and cleansed a repeated number of times, to eliminate the risk of sulphate accumulating in body tissues and, from the aspect of concrete corrosion, in the water. For example, this applies to certain water-purifying systems where water is a scarce commodity, necessitating the water to be used for as long as possible between intermediate purifying operations. After purifying such water 10 times with conventional Al-sulphate or compositions with corresponding sulphate contents (PALS), the sulphate content of the water will be so great that the water will attack the water-piping system, to cause troublesome leaks. The problems arising from the enrichment of sulphate ions are now also prevalent in the manufacture of paper, where for environmental reasons, the water-conveying system is, to a great extent, closed. The manufacturing processes are seriously affected when the amount of salts contained in the paper stock are excessively high.

The chloride-based Al-compositions of the PAC-type or PALC-type, exhibit a number of disadvantages in relation to the sulphate-based compositions, of which the most serious are the excessively high costs of purifying the water with respect to the use of PAC-compositions, and excessively high chloride contents (twice that of PAC) when using PALC-compositions, which should be avoided for environmental reasons. Because of the corrosion risks involved, the chloride-based aluminium compounds are not suited for use in paper-manufacturing processes.

The US Patent Specification No. 4,238,347 describes products with a lower sulphate content than PALS above. These products could represent an attractive alternative to the afore-described sulphate-based Al-compounds when the sulphate content constitutes a problem after treatment, provided that the solutions contain sufficient polynucleates to produce a comparable result. The products, however, have an OH/Al-ratio of up to only 1.5, restricted to 1.3 for practical use. This means that the product has far less polynucleates than, for example, the sulphate-based product described in EP—A—0062015, mentioned above, and is thus less effective than said product, which means that higher quantities must be added and that the use of said product is more expensive and does not reduce the sulphate content to the same extent.

Disclosure of the present invention

It has now surprisingly been found possible to produce a sulphate-based sulphate-poor basic aluminium sulphate product having a degree of polynucleation greater than 1.5.

The novel product according to the invention is characterized in that it comprises a complex basic aluminium sulphate of the formula

$$[Al(OH)_x(SO_4)_y(H_2O)_z]_n$$

in which

x is 1.6—1.8
y is 0.6—0.7
x+2y=3.0 whereat
z is 2.0—2.5 when the product is in a solid form
z is ≫4 when the product is in aqueous solution, and
n is a positive integer.

The compound exists in the form of a polynucleate complex in aqueous solution, and should also be in the same form in the solid product.

Preferred method of carrying out the invention

The compound according to the invention can be prepared as follows:

A basic aluminium-sulphate solution is prepared by precipitating sulphate from an aluminium-sulphate solution by adding calcium hydroxide, whereafter the resultant precipitate, in the form of $CaSO_4x2H_2O$, gypsum, is filtered off.

The sulphate ions can be precipitated by means of any acid-soluble Ca-compound, which separates while forming OH, and also by means of any corresponding barium and strontium compound. Thus, CaO, $CaCO_3$ and $Ca(OH)_2$, or corresponding barium or strontium compounds, can be used, although CaO and

$Ca(OH)_2$ are particularly preferred, especially when concentrated solutions are produced, which concentrated solutions are to be preferred *per se*.

It is only necessary to add small quantities of water to the ingoing reactants during the process, in order to produce solutions with a highly concentrated aluminium. Thus, the ingoing lime in the water is slurried to a manageable consistency, by which is meant ratios of 1:1 between CaO and $H_2O$. A minor quantity of ingoing aluminium sulphate is slurried in water in the reaction vessel, while being vigorously agitated to form a slurry, whereafter the lime slurry and solid aluminium sulphate is added to the slurry progressively and batchwise, or continuously and simultaneously. When adding the lime slurry and solid aluminium sulphate, the pH of the solution should be kept as low as possible, pH<4, to eliminate the risk of precipitating aluminium hydroxide, $Al(OH)_3$. The reaction between aluminium sulphate and lime releases the combined water, in accordance with the following reaction formulae, which exemplify precipitation of half the sulphate:

$$2Al_2(SO_4)_3 \cdot 14H_2O + 3Ca(OH)_2 + xH_2O \rightarrow$$

$$Al_4(SO_4)_3(OH)_6 + 3CaSO_4 \cdot 2H_2O + 22H_2O + xH_2O$$

where $xH_2O$ indicates the optional addition of water.

Thus, in the example, for each Ca there is released

$$\frac{22}{3}H_2O$$

present as a solvent in the final product, from which follows that the amount of water used when slurrying the lime shell be as small as possible. The process is also exothermic through neutralisation heat, and can therefore be carried out without supplying heat from external sources. Because, inter alia, of the ambient conditions, however, it is preferred to supply heat.

In the temperature range 70—90°C the $CaSO_4$-precipitate is less voluminous, with better filtering properties. This explains, among other things, the reason for supplying heat to the process, the temperature preferably being maintained at about 80°C. At room temperature, the solution has a high viscosity and is therefore preferably filtered at a temperature of 80°C. The filtering process is suitably a pressure-filter process, since vacuum filtering results in undesirable boiling of the solution, resulting in uncontrolled concentration.

The foregoing is a preferred method of manufacture. The product, however, can also be produced by metering dry lime to a slurry comprising the total amount of water and aluminium sulphate. The resultant gypsum precipitate is granular, because gypsum precipitates onto the lime nucleates.

In another method of manufacture, the aforedescribed slurry of aluminium sulphate is produced by mixing an ultimate product solution with solid aluminium sulphate. In this case, the water is added to the lime slurry, which as a result becomes thinner and easier to handle, although because of the greater volume obtained more energy is required to effect the filtering process.

Combinations of the aforementioned methods can also be applied.

Example 1

A basic aluminium sulphate solution was prepared in accordance with the preferred process described above, in which the starting raw material comprised

| | |
|---|---|
| Aluminium sulphate | 50.3% (9% Al) |
| Calcium Hydroxide | 12.4% |
| Water | 37.3% |

Subsequent to reacting these constituents at 78°C there was obtained a final product having the following data:

| | |
|---|---|
| Al | 6.3% |
| Basicity | OH/Al=2.0 (=66.6%) |

containing prior to filtration:

| | |
|---|---|
| Basic aluminium solution | 71.2% |
| Calcium sulphate dihydrate | 28.8% |

$CaSO_4 \cdot 2H_2O$ was filtered off, there being obtained a pure, basic aluminium sulphate solution having a density of 1.285 g/cm$^3$.

When stored, the solution proved to be unstable, and the aluminium compound contained therein

decomposed to form insoluble aluminium salts. It is possible to stabilise the solution, however, by adding 1.0—2.0% sodium heptonate, (2, 3, 4, 5, 6, 7—hexahydroxy heptanoic acid sodium salt).

Other suitable stabilizing agents include citric acid, tartaric acid sodium citrate, sodium acetate, sodium tartrate, sodium carbonate or combinations thereof. Other salts of citrate, acetate, tartrate and carbonate can also be used.

Using a complex-forming stabilizer such as citric acid, a citrate, tartaric acid or a tartrate, the stabilizer can be added in an amount corresponding to up to 1/6 of the molar amount of aluminium when citric acid is used and up to 1/4 of the molar amount of aluminium when tartaric acid is used. Other stabilizers of the α-hydroxy-carbolic acid type are lactic acid, malic acid, and glycolic acid. Using lactic and glycolic acid up to 1/2 of the molar content of aluminium can be used, and using malic acid up to 1/4 of the molar content of aluminium can be used. However, a good stabilization is also obtained using half of these amounts, e.g. 1/12 mole of citric acid per mole of aluminium.

The 6%-solution above can be diluted down to a concentration of 2% calculated as Al; the lower concentration should be avoided because of excessively reduced stability, even when a stabilizing agent is added.

As mentioned before, the 6%-solution is unstable due to the prevailing conditions of equilibrium, which results in the formation of insoluble aluminium compounds when the solution is stored, as mentioned in the aforegoing. The rate at which decomposition takes place during storage is dependent on temperature and will increase with increasing temperature.

Despite this, however, it is possible to evaporate the solution to a stable, solid dry product which is soluble in water and which provides solutions which are able to maintain their properties, compared with the original solution. Although the stability may be impaired when re-dissolving the solid product, it is still fully sufficient for practical technical use, for example for application to a paper-making machine.

The evaporating temperature should not exceed 70°C, and, in addition, the time taken to effect the evaporation process should be as short as possible, through selection of suitable evaporation apparatus, such as a thin-layer evaporator with good air ventilation. Such an evaporator provides a brittle cake, which falls to pieces to form an X-ray amorphous product.

When evaporating a product according to the Example, there are also obtained different end-products in dry form, according to the Table below.

TABLE

| Product Content | | 1 | 2 | 3 | 4 |
|---|---|---|---|---|---|
| Al | % | 16.9 | 15.2 | 16.5 | 17.3 |
| $SO_4$ | % | 40.7 | 40.9 | 44.9 | 47.5 |
| $H_2O$ | % | 24.8 | 30.3 | 22.6 | 18.3 |
| OH/Al | | 1.65 | 1.52 | 1.46 | 1.44 |
| Basicity | % | 55.0 | 50.7 | 48.7 | 48.0 |

1. Solution thin-layer evaporated at 65°C
2. Solution vacuum evaporated at 22°C
3. Solution thin-layer evaporated at 65°C
4. Solution thin-layer evaporated at 85°C

Product 4 has poor solubility due to an excessively high evaporation temperature.

The products 1—3 took from 5 to 10 minutes to completely dissolve in water, while product 4 took 1 hour.

Example 2

There was prepared in accordance with Example 1 a solution having the following data:

| | |
|---|---|
| Al | 3% |
| Basicity | OH/Al=1.0 (=33.3%) |

and prior to filtration containing:

| | |
|---|---|
| Basic aluminium sulphate solution | 86.3% |
| Calcium sulphate dihydrate | 13.7% |

The products produced in accordance with the invention exhibited good properties with respect to the neutralisation of the charge in colloidal systems, which promotes good coagulation and rapid flocculation when purifying water, and good retention when manufacturing paper. Since the product is poor in sulphate, it can be used to advantage in paper-making industries employing closed pulp-water systems, to eliminate the undesirable accumulation of sulphate ions. Excessive quantities of sulphate ions block desired surface-chemical reactions.

The aluminium sulphate according to the invention can be used as a water-purifying agent for producing drinking water from crude water or for purifying sewage water prior to releasing said water to a recipient, said aluminium sulphate being used in an amount of 15—2000 g/$m^3$ water.

The aluminium sulphate can also be used as a retention agent in paper-manufacturing processes, the amount of aluminium sulphate used being 0.5—25 kg/ton paper.

The aluminium sulphate can also be used as a means for de-watering vegetable material, such as de-watering beet pulp, the aluminium sulphate being used in an amount of 200—500 g/ton of ingoing wet raw product.

## Claims

1. A basic aluminium sulphate composition which provides in aqueous solution charged polynucleate complexes having charge-neutralizing properties in systems containing suspended or colloidal negatively charged particles, characterized in that it comprises a complex basic aluminium sulphate of the formula

$$[Al(OH)_x(SO_4)_y(H_2O)_z]_n$$

in which

x is 1.6—1.8;
y is 0.6—0.7;
x+2y=3.0, whereat
z is 2.0—2.5 when the sulphate is in solid form,
z is ≫4 when the sulphate is in the form of an aqueous solution, and
n is a positive integer.

2. A composition according to claim 1, characterized in that about 60 to 80% of the aluminium content is in polynucleate complex form.

3. A composition according to claim 1, characterized in that the aluminium content in aqueous solution is 2—7%.

4. A composition according to claims 1—3, characterized in that it comprises as stabilizing agents for the polynucleate complexes one or more of the compounds of the group consisting of citric acid, tartaric acid, lactic acid, malic acid, glycolic acid, and their salts, acetates as sodium acetate, carbonates as sodium carbonate and heptonates as sodium heptonate.

5. The use of a composition according to one or more of claims 1—3 as a water-purifying agent.

6. The use of a composition according to one or more of claims 1—4 as a retention agent in paper-manufacturing processes.

7. A method for producing a basic aluminium sulphate composition according to claims 1—4, characterized by reacting aluminium sulphate with CaO, or $Ca(OH)_2$ in aqueous solution at a pH lower than 4; whereafter the resultant $CaSO_4$-precipitate is separated and the solution, if so desired, evaporated to obtain a solid product.

8. A method according to claim 7, characterized in that the reaction is carried out at a temperature of 70—90°C.

9. A method according to claim 7—8, characterized in that a lime-water slurry and solid aluminium sulphate are added to part of the aluminium sulphate in the form of an aqueous slurry.

## Patentansprüche

1. Basische Aluminiumsulfatzusammensetzung, die in wäßriger Lösung geladene vielkernige Komplexe mit ladungsneutralisierenden Eigenschaften in Systemen, die suspendierte oder Kolloidale negativ geladene Teilchen enthalten, ergibt, dadurch gekennzeichnet, daß sie ein komplexes basisches Aluminiumsulfat der Formel

$$Al(OH)_x(SO_4)_y(H_2O)_{zn}$$

aufweist, worin

x 1,8 bis 1,8 ist,
y 0,6 bis 0,7 ist,
x+2y=3,0, wobei
z 2,0 bis 2,5 ist, wenn das Sulfat in fester Form vorliegt,
z≫4 ist, wenn das Sulfat in der Form einer wäßrigen Lösung vorliegt, und
n eine positive ganze Zahl ist.

2. Zusammensetzung nach Anspruch 1, dadurch gekennzeichnet, daß etwa 60 bis 80% des Aluminiumgehaltes in vielkerniger komplexer Form vorliegen.

3. Zusammensetzung nach Anspruch 1, dadurch gekennzeichnet, daß der Aluminiumgehalt in wäßriger Lösung 2 bis 7% beträgt.

4. Zusammensetzung nach den Ansprüchen 1 bis 3, dadurch gekennzeichnet, daß sie als Stabilisierungsmittel für die vielkernigen Komplexe eine oder mehrere der Verbindungen aus der Gruppe Zitronensäure, Weinsäure, Milchsäure, Apfelsäure, Glycolsäure und ihrer Salze, der Acetate, wie Natriumacetat, der Carbonate, wie Natriumcarbonat, und der Heptonate, wie Natriumheptonat, enthält.

5. Verwendung einer Zusammensetzung nach einem oder mehreren der Ansprüche 1 bis 3 als Wasserreinigungsmittel.

6. Verwendung einer Zusammensetzung nach einem oder mehreren der Ansprüche 1 bis 4 als Retentionsmittel in Papierherstellungsverfahren.

7. Verfahren zur Herstellung einer basischen Aluminiumsulfatzusammensetzung nach den Ansprüchen 1 bis 4, dadurch gekennzeichnet, daß man Aluminiumsulfat mit CaO oder $Ca(OH)_2$ in wäßriger Lösung bei einem pH-Wert unterhalb 4 umsetzt, wonach man den resultierenden $CaSO_4$-Niederschlag abtrennt und die Lösung gegebenenfalls eindampft, um ein festes Produkt zu erhalten.

8. Verfahren nach Anspruch 7, dadurch gekennzeichnet, daß man die Umsetzung bei einer Temperatur von 70 bis 90°C durchführt.

9. Verfahren nach den Ansprüchen 7 und 8, dadurch gekennzeichnet, daß man einen Kalk-Wasser-Schlamm und festes Aluminiumsulfat zu einem Teil des Aluminiumsulfats in der Form eines wäßrigen Schlammes zusetzt.

**Revendications**

1. Composition de sulfate d'aluminium basique, qui fournit en solution aqueuse des complexes polynucléaires chargés présentant des propriétés de neutralisation des charges dans des systèmes contenant des particules à charge négative, en suspension ou colloïdale, caractérisée en ce qu'elle comprend un sulfate d'aluminium basique complexe de la formule:

$$[Al(OH)_x(SO_4)_y(H_2O)_z]_n$$

dans laquelle:

x est égal à 1,6—1,8;
y est égal à 0,6—0,7;
x+2y=3,0;
z est égal à 2,0—2,5 lorsque le sulfate est sous forme solide,
z est ≫4 lorsque le sulfate est sous la forme d'une solution aqueuse, et
n est un nombre positif.

2. Composition suivant la revendication 1, caractérisée en ce que 60 à 80% environ de la teneur en aluminium se trouvert sous la forme d'un complexe polynucléaire.

3. Composition suivant la revendication 1, caractérisée en ce que la teneur en aluminium en solution aqueuse est de 2—7%.

4. Composition suivant les revendications 1—3, caractérisée en ce qu'elle comprend, comme agents de stabilisation pour les complexes polynucléaires, un ou plusieurs des composés du groupe comprenant l'acide citrique, l'acide tartrique, l'acide lactique, l'acide malique, l'acide glycolique et leurs sels, des acétates, tels que l'acétate de sodium, des carbonates, tels que le carbonate de sodium, et des heptonates, tels que l'heptonate de sodium.

5. Utilisation d'une composition suivant une ou plusieurs des revendications 1 à 3, à titre d'agent de purification de l'eau.

6. Utilisation d'une composition suivant une ou plusieurs des revendications 1 à 4, à titre d'agent de rétention dans les procédés de fabrication du papier.

7. Procédé de production d'une composition de sulfate d'aluminium basique suivant les revendications 1—4, caractérisé par la réaction de sulfate d'aluminium avec du CaO, ou du $Ca(OH)_2$ en solution aqueuse à un pH inférieur à 4, le précipité de $CaSO_4$ résultant étant ensuite séparé et la solution, si on le désire, étant évaporée pour donner un produit solide.

8. Procédé suivant la revendication 7, caractérisé en ce que la réaction est menée à une température de 70—90°C.

9. Procédé suivant les revendications 7—8, caractérisé en ce qu'on ajoute une pâte de chaux-eau et du sulfate d'aluminium solide à une partie du sulfate d'aluminium sous forme d'une pâte aqueuse.